Europäisches Patentamt

European Patent Office

Office européen des brevets

(19)

(11) EP 1 487 094 A1

(12) **EUROPEAN PATENT APPLICATION**

(43) Date of publication:
**15.12.2004 Bulletin 2004/51**

(51) Int Cl.[7]: **H02M 7/537**

(21) Application number: **03008983.3**

(22) Date of filing: **17.04.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicant: **ABB AB
721 83 Västeras (SE)**

(72) Inventors:
• **Norrga, Staffan
112 29 Stockholm (SE)**
• **Eicher, Simon
8049 Zürich (CH)**

(74) Representative: **Dahlstrand, Björn
ABB Group Services Center AB
Legal & Compliance/Intellectual Property
721 78 Västeras (SE)**

(54) **A converter and a method for control thereof**

(57)     A converter has a resonant circuit with an auxiliary valve (18), an inductor (17) and capacitive means (15) for assisting in the commutation of the converter. A control device (24) is adapted to control turn-on and turn-off of gate turn-off semiconductor elements of current valves of the converter and controllable semiconductor devices of the auxiliary valve. Means are provided for measuring the current in a phase terminal (10) of the converter. Upon commutation of the phase current from a gate turn-off semiconductor element (13) of one current valve to a rectifier member (14) of another current valve, the auxiliary valve is turned on with a variable time lag after turn-off of the first valve. Means are provided to determine the magnitude of the time lag in dependence on the magnitude of the direction of the measured phase current.

Fig 1

**Description**

FIELD OF THE INVENTION AND BACKGROUND ART

The present invention relates to a converter according to the preamble to claim 1 and to a method for control of such a converter.

In particular, the invention relates to a VSC converter. A VSC converter for connection between a dc voltage network and an ac voltage network is previously known from, for example, the thesis entitled "PWM and control of two'and three level High Power Voltage Source Converters" by Anders Lindberg, the Royal Institute of Technology, Stockholm, 1995, which describes an installation for transmission of electric power via a dc voltage network for high-voltage direct current (HVDC) while utilizing such converters. Known are also installations for transmission of electric power between a dc voltage network and an ac voltage network based on line-commutated CSCs (Current Source Converters) having been used in stations for transmission of power. However, the above-mentioned thesis describes a different concept, which is based on instead using VSCs (Voltage Source Converters) for forced commutation for transmission of electric power between a voltage source dc voltage network thus achieved, in the current case for high-voltage direct current, and ac voltage networks connected thereto, which offers several significant advantages in relation to the use of line-commutated CSCs in HVDC, of which may be mentioned that the consumption of active and reactive power may be controlled independently of each other and that there is no risk of commutating errors in converters and hence no risk of commutating errors being transmitted between different HVDC links, as may be the case with line-commutated CSCs. In addition, there is a possibility of feeding a weak ac voltage network or a network without any generation of its own (a dead ac voltage network). There are also other advantages.

The converter according to the invention may be part of an installation for transmission of electric power via a dc voltage network for high-voltage direct current (HVDC), for, for example, transmitting the electric power from the dc voltage network to an ac voltage network. In this case, the converter has its dc voltage side connected to the dc voltage network and its ac voltage side connected to the ac voltage network. The converter according to the invention may, however, also be directly connected to a load, such as a high-voltage generator or motor, in which case the converter has either its dc voltage side or its ac voltage side connected to the generator/motor. The invention is not limited to these applications, but the converter may just as well be intended for conversion in an SVC (Static Var Compensator) or a back-to-back station. The voltages on the dc voltage side of the converter are advantageously high, 10-400 kV, preferably 130-400 kV. The converter according to the invention may also be included in other types of FACTS devices (FACTS = Flexible Alternating Current Transmission) than those mentioned above.

To limit the turn-off losses in the gate turn-off semiconductor elements of the current valves of the converter, that is, the losses in the gate turn-off semiconductor elements when these are turned off, it is previously known to arrange capacitive members in the form of so-called snubber capacitors connected in parallel across the respective gate turn-off semiconductor element. It is also known to provide the converter with a so-called resonant circuit for recharging said snubber capacitor in connection with commutation of the phase current. In this way, it will also be possible to limit the turn-on losses in the gate turn-off semiconductor elements of the current valves, that is, the losses in the gate turn-off semiconductor elements when these are turned on.

One type of converter provided with a resonant circuit that has been developed and started to be used is the so-called ARCP converter (ARCP = Auxiliary Resonant Commutated Pole).

An ARCP converter comprises a series connection of at least two intermediate-link capacitors that is arranged between the two poles of the dc voltage side of the converter, said series connection being divided via a centre, hereinafter referred to as an intermediate-link centre, into two equal parts in order to supply, at the intermediate-link centre, a voltage essentially corresponding to the mean value of the voltage between the two poles. In case of a commutation of the phase current, assisted by the resonant circuit, a current pulse, corresponding to a certain charge, will flow in the resonant circuit either into or out of the intermediate-link centre. A converter of this kind is previously known from, for example, US 5,047,913.

In the converter according to US 5,047,913, in case of a commutation of the phase current from a gate turn-off semiconductor element of one current valve to a rectifier member of another current valve with the assistance of the resonant circuit, the auxiliary valve of the resonant circuit is controlled such that the current in the resonant circuit and the phase current will charge said capacitive member simultaneously during the whole commutation process. This may be appropriate for low phase currents, but at relatively high phase currents, which are near the phase-current limit, above which no assistance by the resonant circuit is required during the commutation, this will lead to unnecessarily fast commutations and hence high turn-off losses in the gate turn-off semiconductor element of the first current valve. At the same time, the losses in the auxiliary valves of the resonant circuit will be unnecessarily high since the additional current provided by the resonant circuit will have a higher peak value than what is required for achieving the desired commutation.

A converter according to the preamble to claim 1 is described in US 5,880,949, in which, during said commutation, the phase current is measured, and there the first current valve is turned off with a variable time lag after the activation of the resonant circuit so that an extra current pulse is led through the resonant circuit during a commutation assisted by the resonant circuit in order thus to supply or discharge an extra amount of charge to and from the intermediate-link centre. This is done to correct unbalances of the voltage at the intermediate-link centre, but here the losses in the resonant circuit increase because of the additional current that leads to an increase of the peak value of the current through the resonant circuit.

OBJECT OF THE INVENTION

The object of the present invention is to provide a converter and a method of the kind defined in the introductory part of the description, which make possible a reduction of the losses in connection with commutation of such a converter.

SUMMARY OF THE INVENTION

The above-mentioned object is achieved according to the invention by providing a converter and a method according to the appended independent converter and methods claims, respectively.
By measuring the phase current and making the time for turn-on of the auxiliary valve dependent on the size thereof, it can be ensured that the resonant circuit does not contribute more current for charging and discharging of the capacitive members than what is suitable and hence the commutating losses of the converter be kept at the lowest possible level. Thus, by means of the invention, the time lag by which the auxiliary valve is turned on after turn-off of the semiconductor element of the first current valve is chosen such that the losses during the commutation may be reduced in relation to the above-described prior art converter, but such that the commutation can still be completed within the maximally allowed space of time therefor with respect to the current PWM pattern. By said time lag, the voltage derivative for the phase terminal will be reduced, which has a positive effect on the turn-off losses of the gate turn-off semiconductor element of the first current valve. In addition, the time lag will result in a lower peak current in the resonant circuit, which reduces the losses in the auxiliary valve and in the inductor of the resonant circuit. Thus, decisive for the invention is that the time lag is made dependent on the phase current occurring at the particular moment in order to achieve a sufficiently fast commutation but with as far-reaching a reduction of the losses as possible.
In this context, it is appropriate to mention the publication "Resonant snubbers with auxiliary switches", by McMurray, 1989 IEEE, in which a converter of this type is described in which, during said commutation, the auxiliary valve is turned on with a constant time lag after turn-off of the semiconductor element of the first auxiliary valve. Thus, the same time lag is used there for all the phase currents. The constant time lag is not used for reducing the losses in the auxiliary valve, but instead for facilitating achieving a simple control algorithm for the converter.
According to a preferred embodiment of the invention, said determination member is adapted to take into consideration the maximally allowed time for changing the phase voltage on the phase terminal from that on one pole to that on the other pole during said commutation of the phase current when determining the magnitude of said time lag for keeping the time of the phase-voltage change shorter than or equal to the maximally allowed time. In this way, it is ensured that the time lag under no circumstances becomes too long in order for the phase-voltage change to take place sufficiently rapidly.
According to another preferred embodiment of the invention, said determination members are adapted to determine the time lag such that said time for the phase-voltage change is kept constant and is essentially equal to said maximally allowed time. In this way, an optimum time lag is obtained for each phase current, with respect to minimization of the commutating losses, while at the same time it is ensured that the phase-voltage change proceeds sufficiently rapidly.
The invention also relates to a computer program and a computer-readable medium according to the corresponding accompanying claims. It is easily realized that the method according to the invention as defined in the accompanying set of method claims is well suited to be carried out by program instructions from a processor that may be influenced by a computer program provided with the program steps in question.
Further preferred embodiments of the converter according to the invention and the method according to the invention will be clear from the other dependent claims and the following description.

BRIEF DESCRIPTION OF THE DRAWINGS

Preferred embodiments of the invention, mentioned as examples, will be described below with reference to the accompanying drawings, wherein:

Figure 1 is a simplified wiring diagram illustrating a converter according to a first embodiment of the invention,

Figure 2 is a simplified wiring diagram illustrating a converter according to a second embodiment of the invention,

Figures 3-5 show current and voltage curves during different commutation processes,

Figure 6 is a simplified block diagram illustrating a control system for carrying out the method according to the invention,

Figure 7 is a diagram illustrating within which current-limit values a resonant circuit-supported commutation with a time lag according to the invention is utilized,

Figure 8 is a diagram illustrating the change of the current through the resonant circuit and the phase voltage during a commutation process with a delayed and a non-delayed turn-on of the auxiliary valve of the converter, respectively, and

Figure 9 is wiring diagram, corresponding to that of Figure 1, illustrating a converter according to a third embodiment of the invention.

DETAILED DESCRIPTION OF PREFERRED EMBODIMENTS OF THE INVENTION

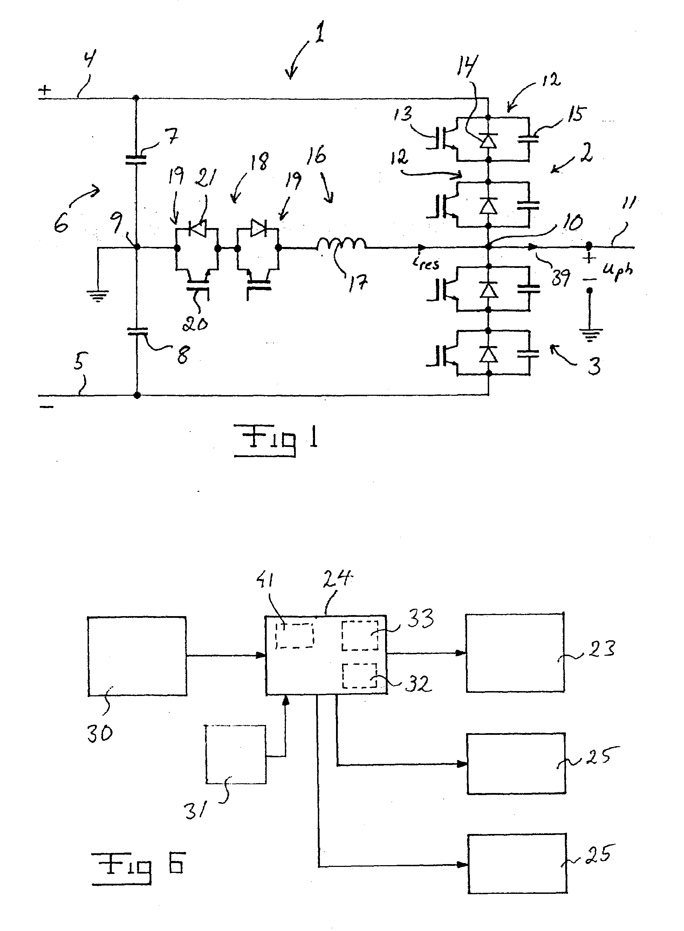

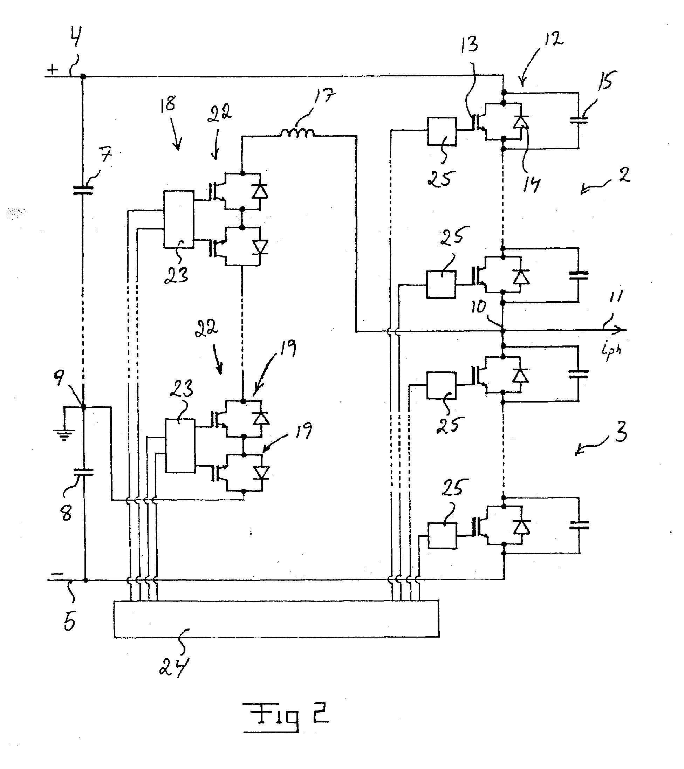

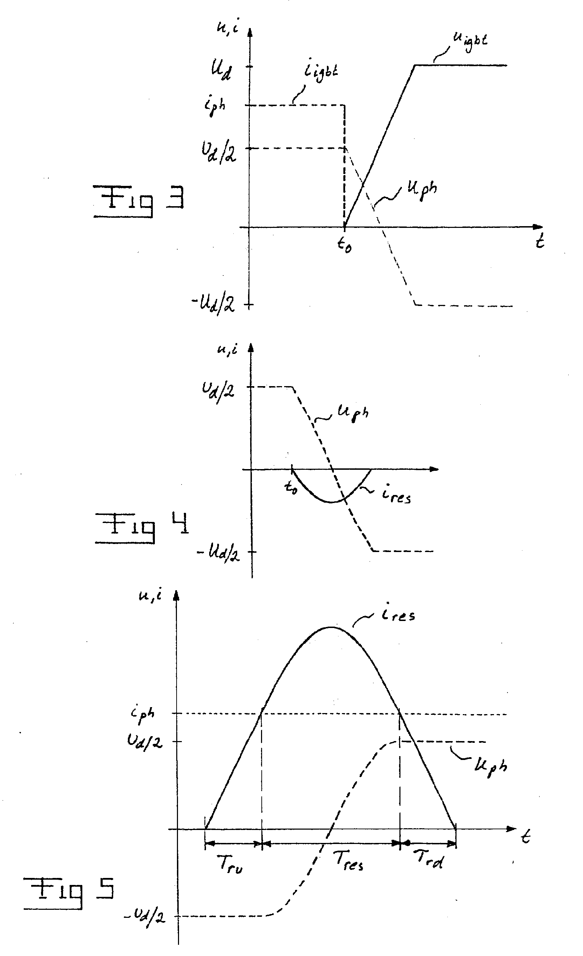

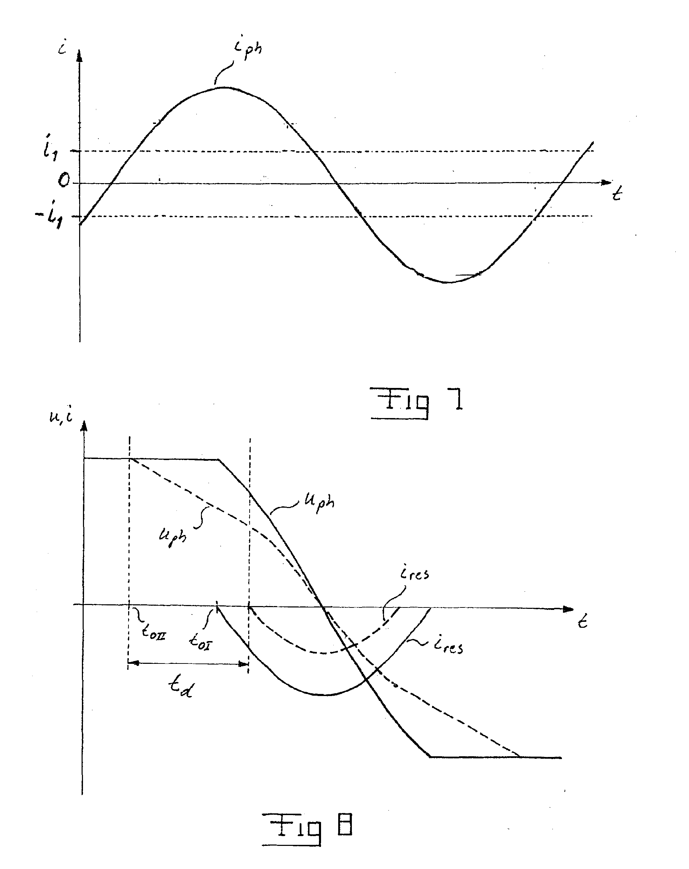

Figure 1 illustrates a converter according to one embodiment of the invention. In this case, the converter is a so-called VSC converter. Figure 1 shows only that part of the converter that is connected to a phase of an ac voltage phase conductor, the number of phases normally being three, but it is also possible that this constitutes the whole converter when the converter is connected to a single-phase ac voltage network. The shown part of the converter constitutes a so-called phase leg and a converter adapted for, for example, a three-phase ac voltage network comprises three phase legs of the type shown.

VSC converters of a plurality of designs are known. In all the designs, a VSC converter comprises a number of so-called current valves, each one comprising a gate turn-off semiconductor element, such as an IGBT (Insulated Gate Bipolar Transistor) or a GTO (Gate Turn-Off Thyristor), and a rectifier member in the form of a diode, a so-called freewheeling diode, connected in anti-parallel therewith. Each gate turn-off semiconductor element is, in high-voltage applications, normally composed of a number of series-connected, simultaneously controlled turn-off semiconductor devices, such as a number of individual IGBTs or GTOs. In high-voltage applications, a relatively large number of such semiconductor devices are required to maintain the voltage, which each current valve has to maintain, in a blocked state. In a corresponding way, each rectifier member is composed of a number of series-connected rectifier devices. The gate turn-off semiconductor devices and the rectifier devices are arranged, in the current valve, in a plurality of series-connected circuits, each of these circuits comprising, among other things, a gate turn-off semiconductor device and a rectifier device connected in anti-parallel therewith.

The phase leg of the converter 1 illustrated in Figure 1 exhibits two current valves 2, 3 connected in series between the two poles 4, 5 of a dc voltage side of the converter. A dc voltage intermediate link 6, comprising at east two so-called intermediate-link capacitors, is provided between the two poles 4, 5. In the converter illustrated in Figure 1, the intermediate link 6 comprises two series-connected intermediate-link capacitors 7, 8. A centre 9, here designated intermediate-link centre, between these capacitors 7, 8 is here connected to ground, as is customary, so that in this way the potentials $+U_d/2$ and $-U_d/2$, respectively, are provided at the respective pole, $U_d$ being the voltage between the two poles 4, 5. The ground point 9 may, however, be omitted, for example in SVC applications.

A centre 10 of the series connection between the two current valves 2 and 3, which constitutes the phase terminal of the converter, is connected to an ac voltage phase conductor 11. In this way, said series connection is divided into two equal parts with a current valve 2 and 3, respectively, on each such part. In the embodiment with three phase legs, the converter thus comprises three phase terminals, which are each connected to an ac voltage phase conductor of a three-phase ac voltage network. Normally, the phase terminals are connected to the ac voltage network via electric equipment in the form of circuit breakers, transformers, etc.

In the embodiment shown, the respective current valve 2, 3 comprises, according to what has been stated above, a plurality of series-connected circuits 12, each of which comprises a gate turn-off semiconductor device 13, such as an IGBT, an IGCT, an MOSFET, a JFET, an MCT, or a GTO, and a rectifier device 14 in the form of a diode, a so-called freewheeling diode, connected in anti-parallel therewith. In the embodiment shown in Figure 1, each current valve 2, 3 comprises two series-connected circuits 12 of the type described above, but the number of series-connected circuits 12 may be both larger and smaller. Depending, among other things, on the voltage for which the converter is designed, the number of said series-connected circuits 12 in the respective current valve 2, 3 may extend from two up to several hundred.

Each one of the series-connected circuits 12 of the respective current valve 2, 3 is provided with a capacitor 15, here designated snubber capacitor, connected in parallel with the gate turn-off semiconductor device 13 included in the circuit. The capacitance of the respective snubber capacitor 15 must be so high that a good voltage distribution between the gate turn-off semiconductor devices 13 included in the respective current valve is made possible when turning off the gate turn-off semiconductor devices of a current valve. The choice of capacitance of the snubber capacitors 15 is adapted in each individual case and depends, among other things, on the current-handling capacity of the gate turn-off semiconductor devices 13 and the rectifier devices 14. The snubber capacitors 15 contribute, inter alia, to limiting the turn-off losses of the current valves, that is, the losses in the gate turn-off semiconductor devices when these are turned off.

When turning off the semiconductor devices 13 of a current valve, the snubber capacitors 15 that are connected over these semiconductor devices 13 will be charged. If the snubber capacitors 15 retain this charge when the semiconductor devices 13 are then turned on, turn-on losses occur in the semiconductor devices 13. The snubber capacitors 15 of a relatively high capacity, which may be used in this context, in this case give rise to very high turn-on losses, which render the use of high switching frequencies impossible. To eliminate or at least reduce these turn-on losses, and make possible the use of high switching frequencies, the snubber capacitors 15 are brought to be part of a resonant circuit 16. This will make it possible to achieve a discharge of the snubber capacitors 15 of a current valve when the semiconductor devices 13 of the current valve are to be turned on such that the voltage across the respective semiconductor device 13 is equal to or near zero when it is turned on, whereby the turn-on losses are limited.

It is also possible to allow a capacitor, provided between the phase terminal 10 and the centre 9 of the dc voltage intermediate link, to form part of the resonant circuit 16.

The converters illustrated in Figures 1 and 2 are of the type designated ARCP converter. The resonant circuit 16 is here of a so-called quasi-resonant type, which means that the resonance is only initiated in connection with the current being commutated between two current valves, that is, when the voltage on the phase terminal of the converter is to be changed.

In the embodiment shown in Figure 1, the resonant circuit 16 comprises a series connection of an inductor 17 and an auxiliary valve 18, said series connection being arranged between the phase terminal 10 and the centre 9 of said series connection of intermediate-link capacitors 7, 8. The auxiliary valve 18 here comprises a set of two series-connected auxiliary valves circuits 19, each one comprising a controllable semiconductor device 20, possibly with gate turn-off means, such as an IGBT, an IGCT, an MOSFET, a JFET, an MCT or a GTO, and a rectifier device 21 in the form of a diode, connected in anti-parallel therewith. The rectifier devices could also be conventional thyristor. The controllable gate turn-off semiconductor devices 20 of the two auxiliary valve circuits 19 are arranged in opposite polarity in relation to each other. This auxiliary valve 18 constitutes a two-way valve that may be brought to lead in one or the other direction.

The term auxiliary valve, as used in this description and the appended claims, relates to a current valve included in the resonant circuit 16 of the converter.

The auxiliary valve 18 may also comprise a plurality of series-connected sets of auxiliary valve circuits if this is found suitable, as illustrated in Figure 2. In the embodiment illustrated in Figure 2, the resonant circuit comprises an auxiliary valve 18 comprising a plurality of series-connected sets 22 of auxiliary valve circuits, where each set comprises two series-connected auxiliary valve circuits 19 of the type described above. Figure 2 shows only two series-connected sets 22 of auxiliary valve circuits of the auxiliary valve 18, but the number of such sets may be considerably higher than that. The number of sets of auxiliary valve circuits of the auxiliary valve 18 may be optimized independently of the number of series-connected circuits 12 of the current valves 2, 3, and depends, among other things, on what voltage the auxiliary valve is to be able to maintain in the blocked state as well as the properties of the individual semiconductor devices 20 to be used.

From a general point of view, it may be determined that the auxiliary valve 18 in the blocked state generally only needs to maintain half the pole voltage, dvs $U_d/2$, as opposed to the current valves 2, 3 which must each be dimensioned to maintain the whole intermediate-link voltage $U_d$ in the blocked state.

Each set 22 of auxiliary valve circuits 19 of the auxiliary valve 18 is, as illustrated in Figure 2, suitably provided with a control unit 23 of its own, which is adapted to control the turn-on and turn-off or only the turn-on of the controllable semiconductor devices 20 included in the set, whereby all the control units 23 of the auxiliary valve are connected to a common control device 24 which is adapted to transmit control signals to all of these control units 23. In this way, a simultaneous control of all the auxiliary valve circuits 19 of the auxiliary valve is ensured.

Further, it is preferred that each one of the gate turn-off semiconductor devices 13 included in the current valves 2, 3 of the converter, as illustrated in Figure, is provided with its own control unit 25, which is adapted to control turn-on and turn-off of the semiconductor device 13, whereby all the control units 25 of the current valves are connected to a common control device 24, which is adapted to transmit control signals to all the control units 25 included in a current valve 2, 3. In this way, a simultaneous control of all the semiconductor devices 13 of a current valve is ensured. The control units 23 of the auxiliary valve and the control units 25 of the current valves are here connected to one and the same control device 24, which is preferable.

There are three basic processes for commutation of the phase current of a converter of the type illustrated in Figures 1 and 2, and these will be briefly described in the following.

The current valve that initially, that is, when the commutation process is initiated, is energized, is referred to in this description and in the appended claims as "the first current valve" or "the output current valve", and the current valve that is to be energized through the commutation is referred to as "the second current valve". It is realized that which of the two current valves 2, 3 illustrated in Figures 1 and 2 that constitutes "the first" and "the second" current valve, respectively, at each specific commutating instant varies from case to case.

In this description and in the appended claims, the expression "a commutation not assisted by the resonant circuit" means that the series connection of the auxiliary valve 18 and the inductor 17, included in the resonant circuit, does not take part in the commutation process. However, it is self-evident that the capacitive members, that is, the snubber capacitors 15, of the resonant circuit take part in this commutation process. Correspondingly, the expression "a commutation assisted by the resonant circuit" means that the series connection of the auxiliary valve 18 and the inductor 17, included in the resonant circuit, takes part in the commutation process.

A first commutation process entails commutation of the phase current from a gate turn-off semiconductor element of an energized first current valve 2, 3 to a rectifier member of a second current valve 2, 3 without the assistance of the resonant circuit 16. The commutation process is initiated by turning off the gate turn-off semiconductor element of the first current valve, whereby the phase current $i_{ph}$ brings about a charge of the capacitive members of the first current valve, that is, its snubber capacitors 15, and a discharge of the capacitive members of the second current valve, that is, its snubber capacitors 15. The phase potential will then swing from one pole to the other. Figure 3 illustrates the change of the current $i_{igbt}$ and the voltage $u_{igbt}$ of the gate turn-off semiconductor element of the first current valve and the phase voltage $u_{ph}$ during the commutation process. The gate turn-off semiconductor element of the first current valve is turned off at the time to, whereby the current through the semiconductor element in the ideal case directly drops to zero. In reality, the semiconductor element will exhibit a certain reverse recovery current. The phase current $i_{ph}$ will then bring about a charge of the capacitive member of the first current valve, whereby the voltage across this member and hence across the gate turn-off semiconductor element increases essentially linearly from zero to a value $U_d$ corresponding to the voltage between the poles 4, 5. It is realized that the turn-off of the semiconductor element of the first current valve may occur essentially without any power losses.

A second commutation process entails commutation of the phase current from a gate turn-off semiconductor element of an energized first current valve 2, 3 to a rectifier member of a second current valve 2, 3 with the assistance of the resonant circuit 16. This commutation process is utilized at low phase currents to accelerate the commutation. The commutation process is initiated by turning on the gate turn-off semiconductor device (the embodiment according to Figure 1), or, where applicable, the gate turn-off semiconductor devices (the embodiment according to Figure 2), which is/are energized in the auxiliary valve. At the same time as or prior to the semiconductor device(s) of the auxiliary valve being turned on, the semiconductor element of the first current valve is turned off. A resonance period now commences, during which the resonant circuit supplies a current to the phase terminal 10 that contributes to charging the snubber capacitors 15 of the first current valve and to discharging the snubber capacitors 15 of the second current valve. After the voltage across the second current valve has dropped to zero, or to a value near zero, the gate turn-off semiconductor element of the second current valve is turned on. In connection with or after the current in the resonant circuit has dropped to zero, the gate turn-off semiconductor device(s) 20, which was/were initially turned on in the auxiliary valve 18, is/are turned off.

Figure 4 illustrates the change of the current ires through the resonant circuit and the phase voltage $u_{ph}$ during the commutation process described above. The gate turn-off semiconductor device(s) of the auxiliary valve 18 is/are turned on at time to. In the case illustrated in Figure 4, the gate turn-off semiconductor element of the first current valve is turned off at the same time to.

A third commutation process entails commutation of the phase current from a rectifier member of an energized first current valve 2, 3 to a gate turn-off semiconductor element of a second current valve 2, 3 with the assistance of the resonant circuit 16. The commutation process is initiated by turning on the gate turn-off semiconductor device (the embodiment according to Figure 1), or, where applicable, the gate turn-off semiconductor devices (the embodiment according to Figure 2), which is/are energized in the auxiliary valve, and by turning off the gate turn-off semiconductor element of the first current valve 2, 3, whereby a so-called ramp-up period is initiated. During the ramp-up period, the current in the resonant circuit increases, under the influence of the voltage $u_{d1}$, $U_{d2}$ across either of the intermediate-link capacitors 7, 8 from zero to a value corresponding to the phase current $i_{ph}$. When the current through the resonant circuit reaches a value corresponding to the phase current $i_{ph}$, a resonant period is initiated during which the snubber capacitors 15 of the first current valve are charged and the snubber capacitors 15 of the second current valve are discharged. When the voltage across the second current valve has dropped to zero or a value near zero, the gate turn-off semiconductor element of the second current valve is turned on. After the resonant period, a so-called ramp-down period commences, during which the current in the resonant circuit drops to zero from a value corresponding to the phase current $ip_h$. When the ramp-down period is over and the current has dropped to zero in the resonant circuit, the gate turn-off semiconductor device(s), which was/were initially turned on in the auxiliary valve 18, is/are turned off.

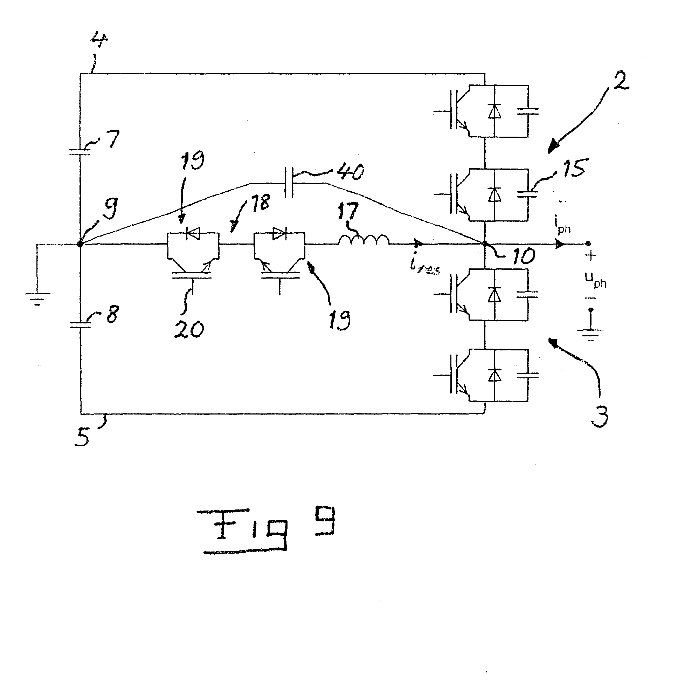

Figure 5 illustrates the change of the current ires through the resonant circuit and the phase voltage $u_{ph}$ during the commutation process described above.

The converter according to the invention is preferably controlled by PWM technology (PWM = Pulse Width Modulation), whereby the control device 24 is supplied with signals representing the desired commutating instants from a modulator 30 schematically illustrated in Figure 6.

The converter according to the invention is provided with means for measuring the phase current $i_{ph}$, schematically indicated at 31 in Figure 6, said means being adapted to transmit measurement signals to the control device 24.

According to the invention, the control device 24 is adapted, during a commutation of the phase current $i_{ph}$ from a gate turn-off semiconductor element of a first current valve 2, 3 to a rectifier member of a second current valve 3, 2, to execute a turn-on of the auxiliary valve 18 with a variable time lag $t_d$ after the turn-off of the first current valve 2, 3. The converter comprises a processor 41 and a member 32 for determining the magnitude of the time lag $t_d$ in dependence on the magnitude and the direction of the phase current measured by the means 31. The processor and the determination member 32 may be integrated into the control device 24, as illustrated in Figure 6, or be arranged separate therefrom. It is also illustrated in Figure 6 how said member for determining the magnitude of the time lag may exhibit a separately indicated memory member 33. This memory member may contain a predetermined value of the time lag for each value or value interval of the phase current, such that the determination member may determine the magnitude of the time lag in accordance with the contents of the memory member. However, it is also possible for the determination member to be designed to calculate a value of the time lag for the phase current, measured at the moment of commutation, for determining the magnitude of the time lag.

Figure 7 illustrates the magnitude interval (between $i_1$ and $-i_1$) of the phase current within which the resonant circuit is to be activated in connection with a commutation of the phase current from a gate turn-off semiconductor element of a first current valve to a rectifier member of a second current valve. The current $i_1$ and the maximum time for commutation assisted by the resonant circuit may be variable and be determined, for example, while taking the PWM pattern into consideration. When the phase current is within this interval, the resonant circuit is used as an aid during the commutation, in order for the time for changing the phase voltage on the phase terminal from the voltage of one pole to the voltage of the other pole to be kept shorter or equal to a maximally allowed value. This requires more assistance from the resonant circuit the lower the absolute amount on the phase current is. More particularly, the time for the whole commutation $t_{s2d}$ may be calculated according to the formula:

$$t_{s2d} = 2t_d + \frac{2}{\omega_0} \arctan\left(\frac{\hat{i}_{res}}{\left|i_{ph}\right|} - \omega_0 t_d\right) \quad \text{for} \quad t_d < \frac{C_s U_d}{2\left|i_{ph}\right|} \tag{1}$$

of which

$$\omega_0 = \frac{1}{\sqrt{L_{aux} C_s}} ; \tag{2}$$

$$\hat{i}_{res} = \frac{U_d}{2} \sqrt{\frac{C_s}{L_{aux}}} \tag{3}$$

$t_d$ is thus the magnitude of the above-mentioned time lag. $L_{aux}$ is the inductance of the resonant circuit 16, whereas $C_s$ is the snubber capacitance, that is, the sum of the total, series-connected snubber capacitance for one valve 2, the total, series-connected snubber capacitance for the other valve 3, and, where applicable, the capacitance of the capacitor arranged between the phase terminal 10 and the centre 9 of the intermediate link.

The method according to the invention is advantageously carried out such that the total time $t_{s2d}$ for changing the phase voltage on the phase terminal from the voltage of one pole to the voltage of the other pole is kept constant, and for a measured phase current $i_{ph}$ the relationship (1) is used for calculating the time lag $t_d$.

To illustrate the invention and what is achieved thereby, the curves drawn in unbroken lines in Figure 8 show the changes of the phase voltage $U_{ph}$ and the current $i_{res}$ through the resonant circuit during a commutation process where the auxiliary valve 18 is turned on while at the same time the output current valve is turned off, that is, at time

$t_{01}$ without any time lag. The curves shown in dashed lines show the corresponding changes during a commutation process where the auxiliary valve 18 is turned on with a certain time lag $t_d$ after the output current valve has been turned off, whereby the output current valve is turned off at time $t_{011}$ and the auxiliary valve is turned on at time $t = t_{011} + td$. For illustrative purposes, the curves have been drawn such that the zero passage of the phase voltage coincides in the two different cases.

As will be clear from Figure 8, the time derivate of the voltage $u_{ph}$ of the phase terminal will be considerably lower in the second case of an actual time lag, which results in lower turn-off losses of the semiconductor element of the output current valve. In addition, the peak value of the current $i_{res}$ in the resonant circuit will be lower and hence the losses lower in the resonant circuit. In this context, the time lag $t_d$ is advantageously made to be maximal while taking into consideration the maximally allowed time for said phase-voltage change for reducing said losses to a maximum extent, such that, at a phase current which is very close below $i_1$ and above $-i_1$, respectively, the time lag is comparatively long and the resonant circuit hardly assists during the commutation.

Figure 9 illustrates a converter according to a third embodiment of the invention, which differs from that according to Figure 1 in that a snubber capacitor 40 is also connected between the centre 10 of the phase leg and the centre 9 of the dc voltage intermediate link. The mode of operation of this converter and all the commutation processes are, in principle, the same as those of the embodiment according to Figure 1 with the entire snubber capacitance parallel to the current valves 2, 3. The only difference is that the calculation of the effective snubber capacitance $C_s$ must be modified to take account of the extra capacitance.

$$C_s = 2C_{sv} + C_{sd}$$

Here, $C_{sv}$ is the capacitance connected in parallel with the respective valve and $C_{sd}$ is the capacitance between the centres of the intermediate link and the phase leg. If each valve has n series-connected sub-valves (valve positions), each having the capacitance $C_{svp}$, then the following applies for the total capacitance connected in parallel with a valve:

$$C_{sv} = \frac{C_{svp}}{n}$$

The invention is not, of course, in any way limited to the preferred embodiments described above, but a number of possibilities of modifications thereof are obvious to a person skilled in the art, without this person having to deviate from the fundamental inventive concept as defined in the appended claims.

For example, the member 32 could be adapted to determine a time lag changing gradually in dependence on the measured phase current. Another possibility is to ensure that the time lag changes continuously as a function of the value of the phase current and so that the magnitude of the time lag increases with the magnitude of the phase current.

Although it is preferable to keep the time for the phase-voltage change constantly very close to the maximally allowed time therefor, it is, however, fully conceivable to deviate from this principle to varying degrees, for example where, for some special application, it is considered to be of greater importance that the phase-voltage change proceeds rapidly but where it is still desired to reduce the commutating losses.

It is also possible to determine the magnitude of the time lag for a measured phase current to have the value that entails a maximum reduction of the power losses in the converter in connection with the commutation of the phase current.

It is pointed out that "measurement of the phase current" in the claims is to be interpreted in a broad sense and comprises not only direct measurement thereof but also determination of the phase current in some other way by some type of indirect measurement, such as measurement of one or more other magnitudes.

**Claims**

1. A converter comprising

   - a series connection of at least two current valves (2, 3) that is arranged between two poles (4, 5), one positive and one negative, of a dc-voltage side of the converter, each of said current valves comprising a gate turn-off semiconductor element and a rectifier member connected in anti-parallel therewith, wherein an ac-voltage phase conductor is connected to a centre (10), named phase terminal, of the series connection between two current valves while dividing the series connection into two equal parts,

- a series connection of at least two intermediate-link capacitors (7, 8) that is arranged between the two poles (4, 5) of the dc-voltage side of the converter, said series connection being divided into two equal parts via a centre (9), named intermediate-link centre,
- a resonant circuit (16), comprising a series connection of an inductor (17) and an auxiliary valve (18), arranged between the phase terminal (10) and the intermediate-link centre (9), said auxiliary valve comprising at least two controllable semiconductor devices (20) arranged in opposite polarity in relation to each other, wherein the resonant circuit further comprises for each current valve at least one capacitive member (15), which is connected in series with said inductor (17) and auxiliary valve (18) and in parallel with the current valve (2, 3),
- a control device (24) comprising a processor (41) for control of turn-on and turn-off of the gate turn-off semiconductor elements of the current valves and the gate turn-off semiconductor devices of the auxiliary valve, and
- means (31) for measuring the phase current ($i_{ph}$),

**characterized in that** the control device (24) is adapted, during a commutation of the phase current ($i_{ph}$) with the assistance of the resonant circuit from a gate turn-off semiconductor element of a first current valve (2, 3) of a first one of said two parts of the series connection to a rectifier member of a second current valve (3, 2) of a second part of the series connection, to execute a turn-on of the auxiliary valve (18) with a variable time lag ($t_d$) after turn-off of the first current valve, and that the converter comprises a member (32) for determining the magnitude of said time lag ($t_d$) in dependence on the magnitude of the phase current ($i_{ph}$).

2. A converter according to claim 1, **characterized in that** said determination member (32) is adapted to take into consideration the maximally allowed time for changing the phase voltage on the phase terminal from the voltage of one pole to that of the other pole during said commutation of the phase current ($i_{ph}$) when determining the magnitude of said time lag to keep the time for the phase-voltage change shorter than or equal to said maximally allowed time.

3. A converter according to claim 1 or 2, **characterized in that** said determination member (32) is adapted to determine a time lag changing gradually in dependence on the value of said phase current.

4. A converter according to claim 1 or 2, **characterized in that** said determination member (32) is adapted to determine said time lag to change continuously as a function of the value of the phase current ($i_{ph}$).

5. A converter according to any of the preceding claims, **characterized in that** said control device (24) with the member (32) for determining the magnitude of the time lag also comprises a memory member (33) adapted to contain a predetermined value of the time lag ($t_d$) for each value or interval of values of the phase current ($i_{ph}$), and that the member (32) is adapted to determine the magnitude of the time lag in accordance with the contents of the memory member.

6. A converter according to any of the preceding claims, **characterized in that** the respective current valve (2, 3) comprises a plurality of series-connected circuits (12), each of said circuits comprising a gate turn-off semiconductor device (13) and a rectifier device (14) connected in anti-parallel therewith, and that a snubber capacitor (15), included in said capacitive member, is connected in parallel with the gate turn-off semiconductor device (13) included in the circuit.

7. A converter according to any of the preceding claims, **characterized in that** the auxiliary valve (18) comprises a plurality of series-connected sets (22) of auxiliary-valve circuits, wherein each set comprises two series-connected auxiliary-valve circuits (19), each one comprising a controllable semiconductor device (20) and a rectifier device (21) connected in anti-parallel therewith, and that the controllable semiconductor devices (20) of the two auxiliary-valve circuits in one and the same set are arranged in opposite polarity in relation to each other.

8. A converter according to any of the preceding claims, **characterized in that** the resonant circuit also comprises a capacitive member (40) that connects the phase terminal (10) to the intermediate-link centre (9).

9. A method for control of a converter comprising,

- a series connection of at least two current valves (2, 3) that is arranged between two poles (4, 5), one positive and one negative, of a dc-voltage side of the converter, each of said current valves comprising a gate turn-off semiconductor element and a rectifier member connected in anti-parallel therewith, wherein an ac-voltage phase conductor (11) is connected to a centre (10), named phase terminal, of the series connection between two current valves while dividing the series connection into two equal parts,
- a series connection of at least two intermediate-link capacitors (7, 8) arranged between the two poles (4, 5) of the dc-voltage side of the converter, said series connection being divided into two equal parts via a centre (9), named intermediate-link centre,
- a resonant circuit (16), comprising a series connection of an inductor (17) and an auxiliary valve (18), arranged between the phase terminal (10) and the intermediate-link centre (9), said auxiliary valve comprising at least two controllable semiconductor devices (20) arranged in opposite polarity in relation to each other, wherein the resonant circuit further comprises for each current valve at least one capacitive member (15), which is connected in series with said inductor (17) and auxiliary valve (18) and in parallel with the current valve (2, 3),
- a control device (24) comprising a processor (41) for control of turn-on and turn-off of the gate turn-off semiconductor elements of the current valves and the gate turn-off semiconductor devices of the auxiliary valve, and
- means (31) for measuring the phase current,

**characterized in that**, during a commutation of the phase current ($i_{ph}$) with the assistance of the resonant circuit from a gate turn-off semiconductor element of a first current valve (2, 3) of a first one of said two parts of the series connection to a rectifier member of a second current valve (3, 2) of a second part of the series connection, the auxiliary valve (18) is turned on with a variable time lag ($t_d$) after turn-off of the first current valve, that the phase current is measured and that the magnitude of said time lag is determined in dependence on the magnitude of the measured phase current.

**10.** A method according to claim 9, **characterized in that** the magnitude of the time lag ($t_d$) is increased by the magnitude of the phase current ($i_{ph}$) within that magnitude interval [$-i_1$, $i_1$] of the phase current within which the resonant circuit is to be activated in connection with a said commutation of the phase current.

**11.** A method according to any of claims 9-10, **characterized in that**, for a measured phase current ($i_{ph}$), the optimum time lag ($t_d$) for maximally reducing the power losses in the converter in connection with the commutation of the phase current is calculated, and the result of this calculation as well as other considerations that are relevant to the commutation procedure are used for determining the time lag.

**12.** A method according to any of claims 9-11, **characterized in that** a value of said time lag ($t_d$) is calculated for the phase current ($i_{ph}$) measured at the moment of commutation, and the magnitude of the time lag is determined on the basis of this calculated value.

**13.** A computer program intended to be loaded into the internal memory of a computer with a processor (41) and comprising instructions for influencing the processor to carry out a method according to one or more of claims 9-12 when the program is executed on the computer.

**14.** A computer program according to claim 13, provided at least partly via a network, such as the Internet.

**15.** A computer-readable medium comprising a computer program that is intended to bring a processor (41) to execute the steps according to any of claims 9-12.

Fig 1

Fig 6

Fig 2

$Fig\ 3$

$Fig\ 4$

$Fig\ 5$

Fig 7

Fig 8

Fig 9

EP 1 487 094 A1

European Patent
Office

**EUROPEAN SEARCH REPORT**

Application Number

EP 03 00 8983

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 03/009459 A (BIJLENGA BO ; ABB AB (SE); NORRGA STAFFAN (SE)) 30 January 2003 (2003-01-30) * the whole document * | 1-15 | H02M7/537 |

TECHNICAL FIELDS
SEARCHED (Int.Cl.7)

H02M

The present search report has been drawn up for all claims

| Place of search | Date of completion of the search | Examiner |
|---|---|---|
| The Hague | 19 October 2004 | Imbernon, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

EP 1 487 094 A1

**ANNEX TO THE EUROPEAN SEARCH REPORT
ON EUROPEAN PATENT APPLICATION NO.**                    EP 03 00 8983

This annex lists the patent family members relating to the patent documents cited in the above–mentioned European search report.
The members are as contained in the European Patent Office EDP file on
The European Patent Office is in no way liable for these particulars which are merely given for the purpose of information.

19-10-2004

| Patent document cited in search report | | Publication date | Patent family member(s) | | Publication date |
|---|---|---|---|---|---|
| WO 03009459 | A | 30-01-2003 | SE | 523486 C2 | 20-04-2004 |
| | | | EP | 1407533 A1 | 14-04-2004 |
| | | | SE | 0102533 A | 17-01-2003 |
| | | | WO | 03009459 A1 | 30-01-2003 |

EPO FORM P0459

For more details about this annex : see Official Journal of the European Patent Office, No. 12/82

17